# EUROPÄISCHE PATENTANMELDUNG

(11) **EP 1 096 840 A2**
(43) Veröffentlichungstag der Anmeldung: **02.05.2001**
(21) Anmeldenummer: 00121638.1
(22) Anmeldetag: 04.10.2000
(51) Int. Cl.: H05K 3/32

(54) **Anordnung optoelektrischer Elemente**

(30) Priorität: 25.10.1999 DE 19951158
(71) Anmelder: Harting Automotive GmbH & Co. KG, 32339 Espelkamp (DE)
(72) Erfinder: Bruland, Alexander, Dipl.-Phys., 32369 Rahden (DE)

(57) **Zusammenfassung**

Für eine auf Leiterplatten zu integrierende Anordnung optoelektrischer Elemente zur Übertragung und Auswertung optischer Signale wird vorgeschlagen, für die wärmeempfindlichen optoelektrischen Bauteile eine steckbare Montage vorzusehen, die erst nach dem Durchlaufen eines Lötbades vorzunehmen ist.

## Beschreibung

Die Erfindung betrifft eine Anordnung optoelektrischer Elemente auf einer Leiterplatte, wobei ein optoelektrischer Wandler über einen Lichtwellenleiter mit einem optischen Steckverbinder verbunden wird.

Optische Steckverbinder mit optoelektrischen Wandlern werden in zunehmendem Maße in der industriellen Kommunikationstechnik und im Bereich der Kfz-Technik aufgrund ihrer Störunanfälligkeit gegen elektromagnetische Signale, ihrer hochwertigen Potentialtrennung der Kommunikationsteilnehmer und höchster Datenübertragungsgeschwindigkeiten, eingesetzt.

Es ist bekannt Lichtwellenleiter-Stecksysteme mit dazu benötigten optischelektrischen Wandlern, sogenannte Transceiver-Module, direkt auf einer zur Signalverarbeitung vorgesehenen Leiterplatte anzuordnen.

Nachteilig wirkt sich dabei aus, dass für den Schutz derartiger Module auf einer Leiterplatte, die in ein Lötbad getaucht werden, entsprechende Vorkehrungen getroffen werden müssen, um eine temperaturbedinge Beschädigung der Bauteile zu vermeiden.

Der Erfindung liegt daher die Aufgabe zugrunde, eine Anordnung optoelektrischer Elemente der eingangs genannten Art dahingehend auszubilden, dass die Montage der optoelektrischen Elemente auf einer Leiterplatte, z.b. mittels Sockel und Rastelementen, erst nach dem Durchlaufen eines Lötbades erfolgt, so dass die optoelektrischen Bauteile nicht einer temperaturbedingten Schädigung des Lötbades ausgesetzt werden.

Diese Aufgabe wird dadurch gelöst, dass der optoelektrische Wandler in einem Sockel auf der Leiterplatte steckbar gehalten ist, dass die Verbindung zwischen dem optoelektrischen Wandler und dem optischen Steckverbinder über flexible Lichtwellenleiter erfolgt, und dass der Sockel mit dem optoelektrischen Wandler und der optische Steckverbinder in einem Winkel zueinander angeordnet sind.

Die mit der Erfindung erzielten Vorteile bestehen insbesondere darin, daß die Bestückung einer Leiterplatte mit optoelektrischen Bauteilen, wie einem optoelektrischen Wandler, erst nach dem Durchlaufen eines Lötbades erfolgt, so dass keine weiteren Vorkehrungen zum Schutz der wärmeempfindlichen Bauteile getroffen werden müssen und die Leiterplatte mit geprüften und damit funktionssicheren Bauteilen ausgerüstet wird.

Ein Ausführungsbeispiel der Erfindung ist in der Zeichnung dargestellt und wird im folgenden näher erläutert. Es zeigen:
- Fig. 1: eine perspektivische Ansicht einer Anordnung optoelektrischer Elemente auf einer Leiterplatte, und
- Fig. 2: eine perspektivische Ansicht eines optischen Wandlers mit einem Sockel und einer Leitplatte.

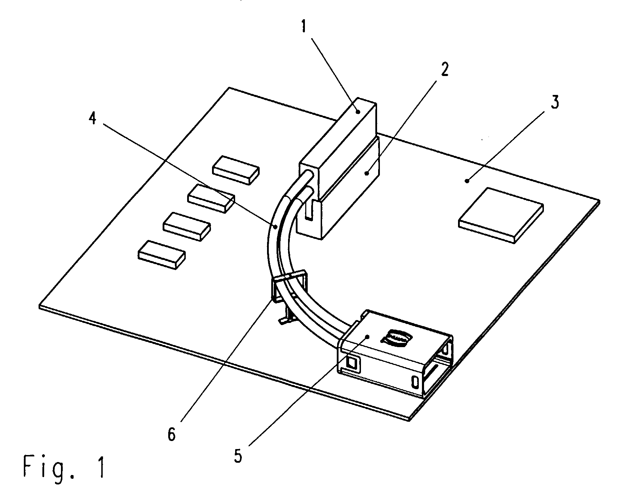

In der Fig. 1 ist in einer perspektivischen Ansicht eine Anordnung optoelektrischer Elemente dargestellt.
Die Anordnung besteht aus einem optoelektrischen Wandler 1, der mittels eines Sockels 2 auf einer Leiterplatte 3 aufgesteckt ist und einem optischen Steckverbinder 5, der mittels Rastelementen auf der Leiterplatte fixiert ist. Der optoelektrische Wandler 1 und der optische Steckverbinder 5 sind in einem Winkel zueinander angeordnet und mit frei beweglichen Lichtwellenleitern 4 verbunden, die in einer Haltevorrichtung 6 gehalten sind.
Der optische Steckverbinder 5 ist ein Steckverbinder für die Übergabe von optischen Signalen von einer Leiterplatte auf ein optisches Verbindungskabel, mit der Besonderheit, dass die in Faserendhülsen gehaltenen Lichtwellenleiter 4 mit einer Druckfeder beaufschlagt, gegen die gleichartigen Faser- endhülsen eines Gegensteckers gedrückt werden, um einen möglichst geringen und konstanten 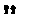 Abstand" der Stirnflächen der Lichtwellenleiter für eine minimale Koppeldämpfung bei der Signalübertragung zu gewährleisten. Damit eine einwandfreie Kopplung durch die Druckfeder gewährleistet ist, müssen die flexiblen Lichtwellenleiter zum optischen Steckverbinders 5 frei verlegt sein.

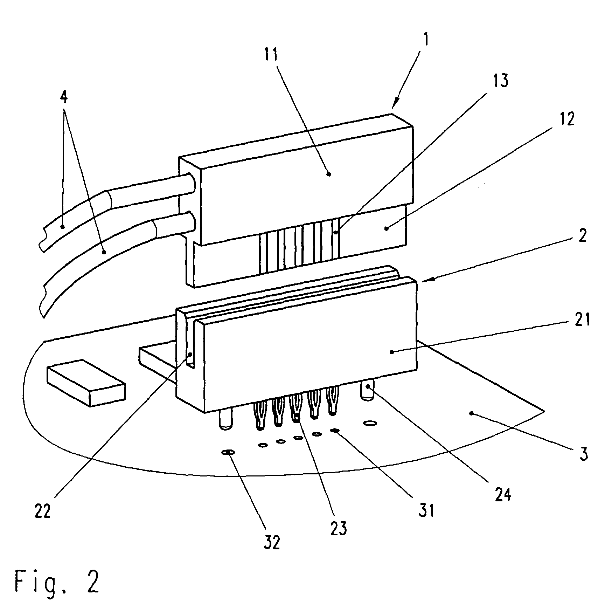

In der Fig. 2 sind der optoelektrische Wandler 1, der Sockel 2 und die Leiterplatte 3 in einem auseinandergezogenen Zustand gezeigt.
Dabei sind Sockel 2 und Wandler 1 in ihrem Aussehen und ihrer Funktionalität wie Nut und Feder geformt.
Die Elektronik des optoelektrischen Wandlers 1 ist in einem länglichen, quaderförmigen Gehäuse 11 untergebracht, wobei die an einer der Schmalseiten austretenden Lichtwellenleiter 4 fest mit dem Gehäuse 11 verbunden sind.
Unterhalb des Gehäuses 11 ist ein abgesetzter Steckbereich 12 angefügt, in dem U-förmige Kontakte 13 eingelassen sind.

Ein Verriegelungsmechanismus - der hier jedoch nicht gezeigt ist - zwischen dem Gehäuse 11 des optoelektrischen Wandlers 1 und dem Sockelgehäuse 21 des Sockels 2, verhindert ein ungewolltes Lösen der Bauteile voneinander.

Der Sockel 2 ist als quaderförmiges Gehäuse 21 der Größe des optoelektrischen Wandlers 1 angepasst und mit einem mittigen Längsschlitz 22 versehen, in den der Steckbereich 12 des optoelektrischen Wandlers einfügbar ist.
Innerhalb des Schlitzes 22 sind Gegenkontakte zu den U-förmigen Kontakten 13 eingelassen, die mit selbsthaltenden Lötkontakten 23 unterhalb des Sockels verbunden sind. Die Lötkontakte 23 werden in Lötaugen 31 der Leiterplatte 3 eingefügt und in einem Lötbad mit Leiterbahnen auf der Leiterplatte 3 elektrisch leitend verbunden.

Weiterhin sind im Sockelgehäuse 21 mechanische Elemente 24 zur Stabilisierung vorgesehen, die in Bohrungen 32 in der Leiterplatte 3 eintauchen.

## Patentansprüche

1. Anordnung optoelektrischer Elemente auf einer Leiterplatte, wobei ein optoelektrischer Wandler über einen Lichtwellenleiter mit einem optischen Steckverbinder verbunden wird, dadurch gekennzeichnet, dass der optoelektrische Wandler (1) in einem Sockel (2) auf der Leiterplatte (3) steckbar gehalten ist,
dass die Verbindung zwischen dem optoelektrischen Wandler (1) und dem optischen Steckverbinder (5) über flexible Lichtwellenleiter (4) erfolgt, und
dass der Sockel (2) mit dem optoelektrischen Wandler (1) und der optische Steckverbinder (5) in einem Winkel zueinander angeordnet sind.
